# EUROPÄISCHE PATENTSCHRIFT

(11) **EP 3 344 521 B1**
(45) Veröffentlichungstag und Bekanntmachung des Hinweises auf die Patenterteilung: **29.07.2020**
(21) Anmeldenummer: 16757821.0
(22) Anmeldetag: 29.07.2016
(51) Int. Cl.: B62D 15/02, B60Q 1/00, G08G 1/16, G05D 1/00, B60G 17/0195, B60K 35/00, B60Q 9/00

(54) **VORRICHTUNG UND VERFAHREN ZUM ANSTEUERN EINES LENKSYSTEMS FÜR EIN KRAFTFAHRZEUG**
DEVICE AND METHOD FOR CONTROLLING A STEERING SYSTEM FOR A MOTOR VEHICLE
DISPOSITIF ET PROCÉDÉ POUR COMMANDER UN SYSTÈME DE DIRECTION D'UN VÉHICULE AUTOMOBILE

(30) Priorität: 31.08.2015 DE 102015216625
(43) Veröffentlichungstag der Anmeldung: 11.07.2018
(73) Patentinhaber: Continental Teves AG & Co. OHG, 60488 Frankfurt am Main (DE)
(72) Erfinder: BRENN, Martin, 55130 Mainz (DE); BÖHMERT, Hagen, 65812 Bad Soden (DE); FÖRSTER, Daniel, 63225 Langen (DE); HUNOLD, Heiner, 55218 Ingelheim (DE)
(86) Internationale Anmeldenummer: PCT/DE2016/200349
(87) Internationale Veröffentlichungsnummer: WO 2017/036469

(56) Entgegenhaltungen:
- EP-A2- 1 314 631
- DE-A1-102006 017 929
- DE-A1-102009 046 966
- DE-A1-102013 020 933
- DE-A1-102013 208 206
- US-A1- 2009 319 095
- US-A1- 2010 231 372
- US-A1- 2011 187 518

## Beschreibung

### Technisches Gebiet

Die vorliegende Erfindung betrifft elektronische Zusatzeinrichtungen in Kraftfahrzeugen zur Unterstützung des Fahrers in bestimmten Fahrsituationen sowie aktive Lenksysteme für Kraftfahrzeuge, wie etwa Spurhalteassistent oder Ausweichassistent. Insbesondere betrifft die vorliegende Erfindung eine Vorrichtung und ein Verfahren zum Ansteuern eines Lenksystems für ein Kraftfahrzeug.

### Technischer Hintergrund

Querregelungen werden als teil- oder vollautomatische Lenksysteme für Kraftfahrzeuge eingesetzt. Die Querregelung erlaubt die teil- oder vollautomatische Steuerung von Kraftfahrzeugen entlang vorgegebener Bahnen. Ferner werden im Kraftfahrzeugbereich Warnsysteme oder Spurverlassenswarner mit aktivem (Lenk)-Eingriff eingesetzt.

Querregelungssysteme umfassen einen Sensor zur Erfassung der Fahrbahnlinien bzw. der Fahrbahnbegrenzungen sowie eine Recheneinheit und einen Lenkaktuator. Ferner werden Querregelungen auch als Spurführungssysteme verwendet oder als Bestandteile eines Stauassistenzfahrsystems verwendet. Dabei kann auch eine Folgefahrt zum Vorderfahrzeug mit lateraler Trajektorienfolge eingesetzt werden.

DE 10 2006 017 929 A1 beschreibt ein verbessertes Fahrerassistenzsystem, das dem Fahrer bei einem drohenden Verlassen der Fahrspur zusätzlich eine Warnung vermittelt, wobei die Kriterien für die Aktivierung bzw. Deaktivierung der Warnung auf möglichst einfache Weise ermittelt werden sollen.

Die DE 10 2013 208206 A1 beschreibt eine Vorrichtung zum Hinweisen auf zukünftige automatisch durchgeführte Lenkeingriffe in einem Fahrzeug.

Die DE 10 2009 046 966 A1 beschreibt ein Lenksystem, bei dem Temperaturgrenzen eines Stellantriebs des Lenksystems erkannt werden und in Abhängigkeit dessen ein Abbruch eines automatischen Fahrerunterstützung herbeigeführt wird, wenn eine Überschreitung einer maximal zulässigen Temperatur des Stellantriebs erfasst wird.

Diese Systeme sind heute als Hands-on-Systeme ausgelegt, das heißt, es wird angenommen bzw. vorausgesetzt, dass der Fahrer seine Hände am Lenkrad hat. Dies gilt vor allem bei höheren Geschwindigkeiten, was sowohl seitens der Regulierung als auch seitens der Gebrauchssicherheit und funktionaler Sicherheit vorausgesetzt wird.

### Zusammenfassung der Erfindung

Es ist eine Aufgabe der vorliegenden Erfindung, eine verbesserte Vorrichtung und ein verbessertes Verfahren zum Ansteuern eines Lenksystems für ein Kraftfahrzeug bereitzustellen, wodurch ein erhöhter Nutzwert beim assistierten Fahren erzielt wird. Diese Aufgabe wird durch die Gegenstände der unabhängigen Patentansprüche gelöst. Ausführungsformen und Weiterbildungen sind den abhängigen Patentansprüchen, der Beschreibung und den Figuren zu entnehmen.

Ein erster Aspekt der vorliegenden Erfindung betrifft eine Vorrichtung zum Ansteuern eines Lenksystems für ein Kraftfahrzeug, wobei die Vorrichtung umfasst: eine Sensoreinrichtung, welche dazu ausgelegt ist, einen Fahrparameter des Kraftfahrzeuges zu erfassen, wobei die Sensoreinrichtung dazu ausgelegt ist, als den Fahrparameter des Kraftfahrzeuges eine laterale Annäherungsgeschwindigkeit des Kraftfahrzeugs an eine Fahrbahngrenze und/oder einen Kurvenverlauf des Kraftfahrzeugs und/oder eine Geschwindigkeit des Kraftfahrzeugs und/oder eine Fahrzeugverzögerung des Kraftfahrzeugs zu erfassen; eine Rechnereinrichtung, welche dazu ausgelegt ist, eine zu erwartende Lenkmomentenanforderung für ein automatisches Lenksystem basierend auf dem Fahrparameter zu ermitteln, und die ermittelte Lenkmomentenanforderung mit einem Schwellenwert zu vergleichen, wobei die Rechnereinrichtung dazu ausgelegt ist, die zu erwartende Lenkmomentenanforderung innerhalb einer zukünftigen Zeitspanne von 0 bis 8 Sekunden für das automatische Lenksystem zu ermitteln und den Schwellenwert basierend auf einer Geschwindigkeit des Kraftfahrzeugs zu berechnen; und eine Ausgabeeinrichtung, welche dazu ausgelegt ist, eine Rückinformation basierend auf dem Schwellenwert und der ermittelten Lenkmomentenanforderung anzuzeigen. Dadurch, dass die Rechnereinrichtung dazu ausgelegt ist, den Schwellenwert basierend auf einer Geschwindigkeit des Kraftfahrzeugs zu berechnen, wird ermöglicht, den Schwellenwert an unterschiedliche Geschwindigkeiten des Kraftfahrzeugs anzupassen.

Mit anderen Worten ausgedrückt, die vorliegende Erfindung ermöglicht vorteilhaft, dass auftretende Systemfehler oder unvorhergesehene Fahrereignisse nicht zu einer unbeherrschbaren Situation für das Kraftfahrzeug führen, beispielsweise durch einen ungewollten Spurwechsel oder ein Abkommen von der Fahrbahn oder ein Einschlagen in die Leitplanke. Die Leistungsgrenze des Querregelsystems, etwa seitens des Lenkaktuators, ist vor allem durch Aspekte der funktionalen Sicherheit und Gebrauchssicherheit definiert. Dies wird in Kraftfahrzeugen etwa durch ein Handlenkmoment von etwa bis zu 3 Nm, mit einer Dauerbegrenzung von beispielsweise bis zu ca. 500 ms und einer Gradientenbegrenzung erreicht.

Als automatisches Lenksystem, wie von der vorliegenden Erfindung definiert, kann dabei ein halb- oder vollautomatisches Lenksystem oder Lenkassistenzsystem oder Lenkeinrichtungen von Kraftfahrzeugen verstanden werden, bei denen der Lenkwinkel der gelenkten Räder durch ein mechatronisches System halb- oder vollautomatisch eingestellt werden kann.

Das automatische Lenksystem kann in einem Fahrerassistenzsystem integriert sein oder mit diesem gekoppelt werden, etwa eine Fahrdynamikregelung mit Lenkeingriff, eine selbstlenkende Einparkhilfe, ein Spurhalteassistent oder ein Ausweichassistent.

Mit anderen Worten ausgedrückt, die vorliegende Erfindung ermöglicht vorteilhaft, frühzeitig eine Eingriffsnotwendigkeit für den Fahrer zu erkennen und durch geeignete akustische oder optische oder haptische Rückmeldung an den Fahrer ein Eingreifen des Fahrers in das Lenksystem zu erreichen.

Als Rückinformation kann eine Fahrerwarnung erfolgen, wenn eine absolute oder relative Leistungsgrenze erreicht ist. Ferner kann die Rückinformation als eine kontinuierliche Informationsanzeige über die vorherrschende Leistungsgrenzenausschöpfung des automatischen Lenksystems ausgebildet werden, ebenso können diese Rückmeldungen an den Fahrer - Fahrerwarnung und kontinuierliche Informationsanzeige - kombiniert werden.

Mit anderen Worten ausgedrückt, die vorliegende Erfindung ermöglicht beispielsweise vorteilhaft ein Anzeige- und/oder Überwachungssystem bereitzustellen, das während einer automatisierten Fahrt mit Lateralregelung über eine elektrische Servolenkung, auf Englisch "Electric Power Steering", abgekürzt EPS, kontinuierlich das angeforderte Lenkmoment überwacht und mit einer Schwelle bzw. einem Schwellenwert abgleicht.

Anschließend kann eine Rückinformation basierend auf dem Schwellenwert und dem Lenkmoment ausgegeben werden.

Die vorliegende Erfindung ermöglicht vorteilhaft, dass der Querregler ein in der Situation erforderliches Lenkmoment vom Lenkaktuator anfordert.

Erfordert beispielsweise die aktuell vorherrschende Fahrsituation - etwa aufgrund eines zu engen Kurvenradius - ein höheres als das erlaubte oder maximal tolerierbare Lenkmoment an, geht das Regelsystem des automatischen Lenksystems in eine Sättigung. Es wird also beispielsweise das maximal erlaubte Lenkmoment permanent umgesetzt, da das Regelsystem permanent ein höheres Lenkmoment anfordert, als der Lenkaktuator liefern kann.

In diesem Fall, wenn der Aktuator eine Lenkmomentenanforderung oder -umsetzung über einem Schwellenwert oder relativ zum Schwellenwert der möglichen Leistungsgrenze erhält, soll der Fahrer eine Übernahme-Aufforderung erhalten, da angenommen wird, dass die Lateralregelung an die Leistungsgrenzen der aufzubringenden Lenkmomente gerät und die kommende - innerhalb einer Zeitspanne von beispielsweise 3 Sekunden - Fahrsituation eine höhere Lenkmomentenumsetzung als erlaubt oder als möglich erfordert.

Die vorliegende Erfindung ermöglicht vorteilhaft, dass durch die Vorrichtung beispielsweise erkannt werden kann, dass mit einer über einem Schwellenwert liegenden Wahrscheinlichkeit eine Situation vorliegt, die eine Fahrerübernahme der Lenkung erfordert und eine Fahrerübernahmeaufforderung hierdurch ausgelöst wird.

Vorteilhaft ermöglicht die vorliegende Erfindung, dass keine möglicherweise fehleranfälligen Algorithmen in einem Steuergerät, wie etwa einem Kamerasensorsystem, erforderlich sind.

Vorteilhafte Ausgestaltungen der vorliegenden Erfindung sind in den weiteren Unteransprüchen gekennzeichnet.

In einer vorteilhaften Ausführungsform der vorliegenden Erfindung ist vorgesehen, dass die Rechnereinrichtung dazu ausgelegt ist, die zu erwartende Lenkmomentenanforderung innerhalb einer zukünftigen Zeitspanne von 0 bis 3 Sekunden, besonders bevorzugt innerhalb einer zukünftigen Zeitspanne von 0 bis 1,5 Sekunden für das automatische Lenksystem zu ermitteln.

Dies ermöglicht vorteilhaft, eine vorausschauende Steuerung bereitzustellen und Gefahrensituationen für das Kraftfahrzeug zu vermeiden.

In einer weiteren, vorteilhaften Ausführungsform der vorliegenden Erfindung ist vorgesehen, dass die Rechnereinrichtung dazu ausgelegt ist, die zu erwartende Lenkmomentenanforderung für eine Querreglung des automatischen Lenksystems zu ermitteln. Dies ermöglicht vorteilhaft, die Sicherheit eines automatischen Lenksystems zu erhöhen.

In einer weiteren vorteilhaften Ausführungsform der vorliegenden Erfindung ist vorgesehen, dass die Rechnereinrichtung dazu ausgelegt ist, den Schwellenwert basierend auf konstruktiven Parametern des Kraftfahrzeuges und/oder des Lenksystems und/oder basierend auf einer Beherrschbarkeitsgrenze zum Erreichen einer funktionalen Sicherheit des Kraftfahrzeuges zu bestimmen. Dies ermöglicht vorteilhaft, konstruktive Änderungen des Kraftfahrzeugs oder des Lenksystems zu berücksichtigen oder die Vorrichtung an unterschiedliche Fahrmodi oder gesetzliche Bestimmungen anzupassen.

In einer weiteren vorteilhaften Ausführungsform der vorliegenden Erfindung ist vorgesehen, dass die Vorrichtung ferner eine Steuerungseinrichtung aufweist, welche dazu ausgelegt ist, die Fahrgeschwindigkeit des Kraftfahrzeugs zu ändern.

In einer weiteren vorteilhaften Ausführungsform der vorliegenden Erfindung ist vorgesehen, dass die Ausgabeeinrichtung als ein akustischer Signalgeber, als eine optische Anzeige oder als ein haptischer Signalgeber ausgebildet ist. Dies ermöglicht vorteilhaft, den Fahrer auf die Übernahmeaufforderung aufmerksam zu machen. Als haptischer Signalgeber kann ein mechatronischer Signalgeber beispielsweise am Lenkrad oder am Fahrersitz verwendet werden, der durch Vibrationen den Eintritt eines Ereignisses signalisiert. Die Vibrationen können durch einen Elektromotor erzeugt werden, der eine Unwucht antreibt. Die Unwucht sorgt aufgrund ihrer Massenträgheit dafür, dass das der Signalgeber vibriert.

In einer weiteren vorteilhaften Ausführungsform der vorliegenden Erfindung ist vorgesehen, dass die Ausgabeeinrichtung dazu ausgelegt ist, die Rückinformation in Form einer Aufforderung für die Fahrerübernahme anzuzeigen, falls die ermittelte Lenkmomentenanforderung über dem Schwellenwert liegt.

In einer weiteren vorteilhaften Ausführungsform der vorliegenden Erfindung ist vorgesehen, dass die Ausgabeeinrichtung dazu ausgelegt ist, eine Leistungsgrenzenausschöpfung in Form eines Verhältnisses von der zu erwartenden Lenkmomentenanforderung zu dem Schwellenwert anzuzeigen. Dies ermöglicht vorteilhaft, dem Fahrer Informationen über die aktuelle Leistungsgrenze der Querregelung des Lenksystems anzuzeigen.

Nach einem weiteren, zweiten Aspekt der vorliegenden Erfindung wird ein Verfahren zum Ansteuern eines Lenksystems für ein Kraftfahrzeug bereitgestellt, wobei das Verfahren folgende Verfahrensschritte umfasst: Erfassen eines Fahrparameters des Kraftfahrzeugs mittels einer Sensoreinrichtung, wobei die Sensoreinrichtung dazu ausgelegt ist, als den Fahrparameter des Kraftfahrzeuges eine laterale Annäherungsgeschwindigkeit des Kraftfahrzeugs an eine Fahrbahngrenze und/oder einen Kurvenverlauf des Kraftfahrzeugs und/oder eine Geschwindigkeit des Kraftfahrzeugs und/oder eine Fahrzeugverzögerung des Kraftfahrzeugs zu erfassen; Ermitteln einer zu erwartenden Lenkmomentenanforderung für ein automatisches Lenksystem basierend auf dem Fahrparameter mittels einer Rechnereinrichtung und Vergleichen der ermittelten Lenkmomentenanforderung mit einem Schwellenwert mittels der Rechnereinrichtung, wobei die Rechnereinrichtung dazu ausgelegt ist, die zu erwartende Lenkmomentenanforderung innerhalb einer zukünftigen Zeitspanne von 0 bis 8 Sekunden für das automatische Lenksystem zu ermitteln und den Schwellenwert basierend auf einer Geschwindigkeit des Kraftfahrzeugs zu berechnen; und Anzeigen einer Rückinformation basierend auf dem Schwellenwert und der ermittelten Lenkmomentenanforderung.

### Kurze Beschreibung der Figuren

Die beiliegenden Zeichnungen sollen ein weiteres Verständnis der Ausführungsformen der vorliegenden Erfindung vermitteln. Die beiliegenden Zeichnungen veranschaulichen Ausführungsformen und dienen im Zusammenhang mit der Beschreibung der Erklärung von Konzepten der vorliegenden Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
Fig. 1: eine schematische Darstellung einer Vorrichtung zum Ansteuern eines Lenksystems für ein Kraftfahrzeug gemäß einer Ausführungsform der vorliegenden Erfindung;
Fig. 2: eine schematische Darstellung eines Flussdiagramms eines Verfahrens zum Ansteuern eines Lenksystems für ein Kraftfahrzeug gemäß einer weiteren Ausführungsform der vorliegenden Erfindung;
Fig. 3: eine schematische Darstellung einer Querregelung für ein Kraftfahrzeug gemäß einer weiteren Ausführungsform der vorliegenden Erfindung; und
Fig. 4: eine schematische Darstellung eines Diagramms einer Anzeige einer Leistungsgrenzenausschöpfung gemäß einer weiteren Ausführungsform der vorliegenden Erfindung.

### Detaillierte Beschreibung von Ausführungsbeispielen

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

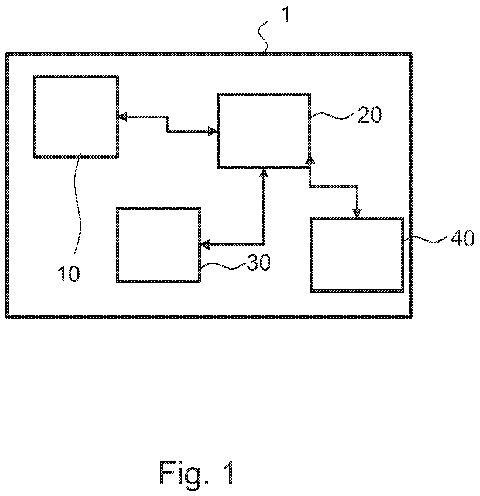

Die Fig. 1 zeigt eine schematische Darstellung einer Vorrichtung zum Ansteuern eines Lenksystems für ein Kraftfahrzeug.

Die Vorrichtung 1 kann auch zum Anzeigen einer Fahrerübernahme für ein Kraftfahrzeug bzw. zum Anzeigen einer Rückinformation ausgebildet sein.

Die Vorrichtung 1 umfasst eine Sensoreinrichtung 10, eine Rechnereinrichtung 20 und eine Ausgabeeinrichtung 30.

Ferner kann die Vorrichtung 1 beispielsweise eine Steuereinrichtung 40 aufweisen.

Die Sensoreinrichtung 10 ist dazu ausgelegt, einen Fahrparameter des Kraftfahrzeugs zu erfassen.

Die Rechnereinrichtung 20 ist dazu ausgelegt, eine zu erwartende Lenkmomentenanforderung für ein automatisches Lenksystem zu ermitteln und die ermittelte Lenkmomentenanforderung mit einem Schwellenwert zu vergleichen.

Die Ausgabeeinrichtung 30 ist dazu ausgelegt, eine Rückinformation basierend auf dem Schwellenwert und der ermittelten Lenkmomentenanforderung anzuzeigen.

Die Ausgabeeinrichtung 30 kann ferner dazu ausgelegt sein, eine Aufforderung für die Fahrerübernahme anzuzeigen, falls die ermittelte Lenkmomentenanforderung über dem Schwellenwert liegt.

Ferner kann die Ausgabeeinrichtung 30 dazu ausgelegt sein, eine Leistungsgrenzenausschöpfung in Form eines Verhältnisses von der zu erwartenden Lenkmomentenanforderung zu dem Schwellenwert anzuzeigen, beispielsweise in der Form einer Balkenanzeige.

In einer weiteren Ausführungsform der vorliegenden Erfindung kann eine kombinierte Anzeige durch die Ausgabeeinrichtung 30 erfolgen, d.h. gleichzeitig kann eine Aufforderung für die Fahrerübernahme sowie eine aktuell vorherrschende Leistungsgrenzenausschöpfung angezeigt werden.

Die Steuerungseinrichtung 40 ist beispielsweise dazu ausgelegt, die Fahrgeschwindigkeit des Kraftfahrzeugs zu ändern.

Die Rechnereinrichtung 20 ist beispielsweise dazu ausgelegt, die zu erwartende Lenkmomentenanforderung innerhalb einer zukünftigen Zeitspanne von 0 bis 8 Sekunden oder von 0 bis 3 Sekunden oder von 0 bis 1,5 Sekunden für das automatische Lenksystem zu ermitteln.

In anderen Worten ausgedrückt bedeutet dies, dass innerhalb der nächsten 8 Sekunden oder innerhalb der nächsten 3 Sekunden oder innerhalb der nächsten 1,5 Sekunden die zu erwartende Lenkmomentenanforderung ermittelt wird bzw. ein maximal zu erwartender Lenkmomentenwert innerhalb dieser zukünftigen Zeitspanne von bis 8 Sekunden als die Lenkmomentenanforderung berechnet wird.

Dabei kann als die Lenkmomentenanforderung ein zu erwartender Mittelwert oder ein zu erwartender Maximalwert des Lenkmoments - wie er innerhalb dieser zukünftigen Zeitspanne von bis 8 Sekunden auftreten kann - berechnet werden.

Die Rechnereinrichtung 20 kann dazu ausgelegt sein, dass der Schwellenwert über die konstruktive Fähigkeit der Lenkung abgestimmt wird oder der Schwellenwert basierend auf Beherrschbarkeitsgrenzen zur Erreichung der funktionellen Sicherheit des Kraftfahrzeugs gewählt wird.

Über den relativen Schwellenwert kann die Vorwarnzeit bis zum Eintreten der nicht beherrschbaren Situation vergrößert werden.

Die Vorrichtung 1 kann dazu ausgelegt sein, eine prädiktive Erkennung des voraussichtlichen Erreichens der Leistungsgrenze des Querreglersystems bereitzustellen und eine Fahrerübernahmeaufforderung anzuzeigen.

Ferner kann eine Erkennung und Auswertung der lateralen Annäherungsgeschwindigkeit des Fahrzeugs an die Fahrbahngrenze durch die Sensoreinrichtung erkannt werden und von der Rechnereinrichtung 20 verarbeitet werden.

Ferner kann die Sensoreinrichtung 10 dazu ausgebildet sein, einen Kurvenverlauf über eine Umfeldsensorik in Form einer Kamera zu erkennen und diese Daten an die Rechnereinrichtung 20 als den Fahrparameter zu übermitteln. Dabei kann die Rechnereinrichtung 20 dazu ausgebildet sein, eine Prädiktion zu treffen, ob die Leistungsgrenze der Querregelung erreicht wird und dies mittels der Ausgabeeinrichtung 30 anzuzeigen.

Ferner kann die Rechnereinrichtung 20 ein abgelegtes Kennfeld bzw. Kennlinienfeld umfassen. Das Kennlinienfeld kann dabei eine Leistungsgrenze innerhalb eines erforderlichen Lenkmomentes abbilden, welches über die Fahrzeuggeschwindigkeit aufgetragen wird und/oder über einen Kurvenradius aufgetragen wird.

Ferner kann das abgespeicherte Kennlinienfeld auch eine Leistungsgrenze innerhalb eines erforderlichen Lenkmomentes über eine von dem Kraftfahrzeug zu bewältigende Steigung und/oder über eine von dem Kraftfahrzeug durchgeführte Fahrzeugverzögerung umfassen.

In einer weiteren vorteilhaften Ausführungsform der vorliegenden Erfindung kann die Rechnereinrichtung 20 dazu ausgebildet sein, eine modellbasierte Prädiktion vorzunehmen in Form eines Einspurmodells in Verbindung mit einem Ackermann-Winkel.

In einer weiteren vorteilhaften Ausführungsform der vorliegenden Erfindung kann die Vorwarnzeit in diesen Fällen über eine Schwelle abgebildet werden, d.h. der Schwellenwert kann dazu verwendet werden, die Vorwarnzeit je nach vorherrschenden Bedürfnissen, Helligkeitsbedingungen, oder Fahrsituationen einzustellen. Beispielsweise kann definiert werden, dass eine Vorwarnzeit größer sein soll als die Zeit bis zum Erreichen einer Leistungsgrenze.

In einer weiteren vorteilhaften Ausführungsform der vorliegenden Erfindung kann vorgesehen sein, dass die Ausgabeeinrichtung 30 dazu ausgebildet ist, eine Anzeige in einem Instrumentenpanel, in der Mittelkonsole oder in einem HUD-Display bereitzustellen, um dem Fahrer permanent den aktuellen oder den präzisierten Status der Leistungsgrenzenausschöpfung zu visualisieren.

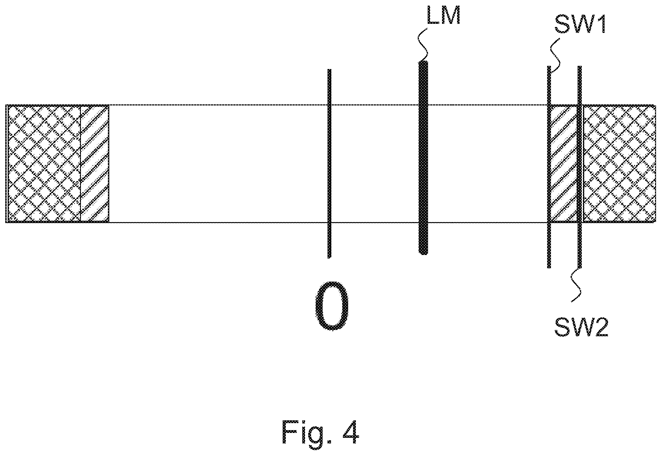

Dies wird nachfolgend in der Fig. 4 gezeigt. Es wird erwartet, dass der Fahrer seine Aufmerksamkeit auf mögliche Funktionslimitierungen erhöht, wenn diese Anzeige je nach Fahrsituation eine hohe Kapazitätsauslastung anzeigt.

In einer weiteren vorteilhaften Ausführungsform der vorliegenden Erfindung ist vorgesehen, dass je nach aktueller oder präzisierter Leistungsgrenzenausschöpfung die zu planende Fahrzeuggeschwindigkeit reduziert wird, sobald diese den Schwellenwert für die Leistungsgrenzenausschöpfung überschritten wird.

So kann im Falle eines Lenkungsausfalls bei hohen Lenkmomenten die tolerierbare Fahrerreaktionszeit erhöht werden.

Ferner kann ein automatisches Lenksystem die Vorrichtung 1 umfassen.

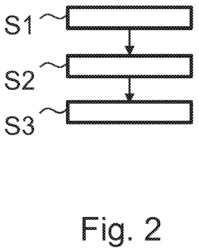

Die Fig. 2 zeigt eine schematische Darstellung eines Flussdiagramms für ein Verfahren zum Ansteuern eines Lenksystems für ein Kraftfahrzeug zum Anzeigen einer Fahrerübernahme für ein Kraftfahrzeug gemäß einer weiteren Ausführungsform der vorliegenden Erfindung.

Das Verfahren kann auch als ein Verfahren zum Anzeigen einer Fahrerübernahme für ein Kraftfahrzeug bzw. zum Anzeigen einer Rückinformation ausgebildet sein.

Das Verfahren zum Ansteuern eines Lenksystems für ein Kraftfahrzeug umfasst folgende Verfahrensschritte:
Als ein erster Verfahrensschritt erfolgt ein Erfassen S1 eines Fahrparameters des Kraftfahrzeugs mittels einer Sensoreinrichtung 10.

Als ein zweiter Schritt des Verfahrens erfolgt ein Ermitteln S2 einer zu erwartenden Lenkmomentenanforderung für ein automatisches Lenksystem basierend auf dem Fahrparameter mittels einer Rechnereinrichtung 20 und ein Vergleichen der ermittelten Lenkmomentenanforderung mit einem Schwellenwert mittels der Rechnereinrichtung 20.

Als ein dritter Schritt des Verfahrens erfolgt ein Anzeigen S3 einer Rückinformation basierend auf dem Schwellenwert und der ermittelten Lenkmomentenanforderung mittels einer Ausgabeeinrichtung 30.

Ferner kann durch die Ausgabeeinrichtung 30 eine Aufforderung für die Fahrerübernahme erfolgen, falls die ermittelte Lenkmomentenanforderung über dem Schwellenwert liegt.

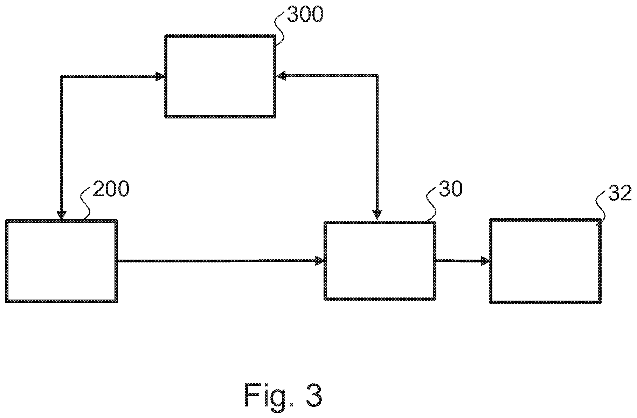

Die Fig. 3 zeigt eine schematische Darstellung einer Querregelung gemäß einer weiteren Ausführungsform der vorliegenden Erfindung. Die Fig. 3 zeigt eine Querregelung 200, welche mit einem Lenkaktuator 300, auch Electric Power Steering, abgekürzt EPS, gekoppelt ist.

Der Lenkaktuator 300 und die Querregelung 200 sind mit einer Ausgabeeinrichtung 30 gekoppelt, welche eine Fahrerwarnung 32 ausgeben kann. Die Querregelung 200 des automatischen Lenksystems kann mit der Rechnereinrichtung 20 gekoppelt sein. Ferner kann die Sensoreinrichtung 10 mit der Querregelung 200 gekoppelt werden.

Die Ausgabeeinrichtung 30 kann sich außerhalb des Lenkaktuators 300 des automatischen Lenksystems in einem zweiten Steuergerät befinden oder innerhalb des automatischen Lenksystems oder der Querregelung 200 eingebettet sein.

Die Fig. 4 zeigt eine schematische Darstellung einer Anzeige zur Visualisierung der Leistungsgrenzenausschöpfung gemäß einer weiteren Ausführungsform der vorliegenden Erfindung.

Eine Lenkmomentenanforderung LM ist dargestellt, welche sich innerhalb eines Lenkmomentenbereichs befindet, welcher durch Schwellenwerte SW1, SW2 begrenzt ist.

Beispielsweise kann ein erster Lenkmomentenbereich durch einen ersten Schwellenwert SW1 definiert sein, welcher einen Warnbereich darstellt.

Ferner kann ein weiterer doppelt schraffierter Lenkmomentenbereich durch eine weiteren Schwellenwert SW2 definiert sein und eine Funktionslimitierung des automatischen Lenksystems darstellen.

Der einfach schraffierte Bereich drückt einen Warnbereich aus. Wird ein Lenkmoment aufgebracht bzw. eine Lenkmomentenanforderung LM angefordert, welche sich innerhalb des einfach schraffierten Bereichs befindet, kann die Vorrichtung 1 dazu ausgebildet sein, dass eine Rückinformation - beispielsweise eine Aufforderung an den Fahrer, die Lenkung zu übernehmen - angezeigt wird.

Der nicht-schraffierte Bereich kann als Normalbereich für vom automatischen Lenksystem beherrschbare Lenkmomente verstanden werden.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

## Patentansprüche

1. Vorrichtung (1) zum Ansteuern eines Lenksystems für ein Kraftfahrzeug, wobei die Vorrichtung (1) umfasst:
- eine Sensoreinrichtung (10), welche dazu ausgelegt ist, einen Fahrparameter des Kraftfahrzeuges zu erfassen, wobei die Sensoreinrichtung (10) dazu ausgelegt ist, als den Fahrparameter des Kraftfahrzeuges
i) eine laterale Annäherungsgeschwindigkeit des Kraftfahrzeugs an eine Fahrbahngrenze; und/oder
ii) einen Kurvenverlauf des Kraftfahrzeugs; und/oder
iii) eine Geschwindigkeit des Kraftfahrzeugs; und/oder
iv) eine Fahrzeugverzögerung des Kraftfahrzeugs zu erfassen;
- eine Rechnereinrichtung (20), welche dazu ausgelegt ist, eine zu erwartende Lenkmomentenanforderung für ein automatisches Lenksystem basierend auf dem Fahrparameter zu ermitteln, und die ermittelte Lenkmomentenanforderung mit einem Schwellenwert zu vergleichen, wobei die Rechnereinrichtung (20) dazu ausgelegt ist,
die zu erwartende Lenkmomentenanforderung innerhalb einer zukünftigen Zeitspanne von 0 bis 8 Sekunden für das automatische Lenksystem zu ermitteln und
den Schwellenwert basierend auf einer Geschwindigkeit des Kraftfahrzeugs zu berechnen; und
- eine Ausgabeeinrichtung (30), welche dazu ausgelegt ist, eine Rückinformation basierend auf dem Schwellenwert und der ermittelten Lenkmomentenanforderung anzuzeigen.

2. Vorrichtung nach Anspruch 1,
wobei die Rechnereinrichtung (20) dazu ausgelegt ist, die zu erwartende Lenkmomentenanforderung innerhalb einer zukünftigen Zeitspanne von 0 bis 3 Sekunden, bevorzugt innerhalb einer zukünftigen Zeitspanne von 0 bis 1,5 Sekunden für das automatische Lenksystem zu ermitteln.

3. Vorrichtung nach einem der vorhergehenden Ansprüche 1 und 2,
wobei die Rechnereinrichtung (20) dazu ausgelegt ist, die zu erwartende Lenkmomentenanforderung für eine Querreglung des automatischen Lenksystems zu ermitteln.

4. Vorrichtung nach einem der vorhergehenden Ansprüche 1 bis 3,
wobei die Rechnereinrichtung (20) dazu ausgelegt ist, den Schwellenwert basierend auf:
i) konstruktiven Parametern des Kraftfahrzeuges und/oder des Lenksystems; und/oder
ii) einer Beherrschbarkeitsgrenze zum Erreichen einer funktionalen Sicherheit des Kraftfahrzeuges zu bestimmen.

5. Vorrichtung nach einem der vorhergehenden Ansprüche 1 bis 4,
wobei die Vorrichtung ferner aufweist: eine Steuerungseinrichtung (40), welche dazu ausgelegt ist, die Fahrgeschwindigkeit des Kraftfahrzeuges zu ändern.

6. Vorrichtung nach einem der vorhergehenden Ansprüche 1 bis 5,
wobei die Ausgabeeinrichtung (30) als ein akustischer Signalgeber, als eine optische Anzeige, oder als ein haptischer Signalgeber ausgebildet ist.

7. Vorrichtung nach einem der vorhergehenden Ansprüche 1 bis 6,
wobei die Ausgabeeinrichtung (30) dazu ausgelegt ist, die Rückinformation in Form einer Aufforderung für die Fahrerübernahme anzuzeigen, falls die ermittelte Lenkmomentenanforderung über dem Schwellenwert liegt.

8. Vorrichtung nach einem der vorhergehenden Ansprüche 1 bis 7,
wobei die Ausgabeeinrichtung (30) dazu ausgelegt ist, eine Leistungsgrenzenausschöpfung in Form eines Verhältnisses von der zu erwartenden Lenkmomentenanforderung zu dem Schwellenwert anzuzeigen.

9. Verfahren zum Ansteuern eines Lenksystems für ein Kraftfahrzeug, wobei das Verfahren folgende Verfahrensschritte umfasst:
- Erfassen (S1) eines Fahrparameters des Kraftfahrzeuges mittels einer Sensoreinrichtung (10) wobei die Sensoreinrichtung (10) dazu ausgelegt ist, als den Fahrparameter des Kraftfahrzeuges
i) eine laterale Annäherungsgeschwindigkeit des Kraftfahrzeugs an eine Fahrbahngrenze; und/oder
ii) einen Kurvenverlauf des Kraftfahrzeugs; und/oder
iii) eine Geschwindigkeit des Kraftfahrzeugs; und/oder
iv) eine Fahrzeugverzögerung des Kraftfahrzeugs zu erfassen; und
- Ermitteln (S2) einer zu erwartenden Lenkmomentenanforderung für ein automatisches Lenksystem basierend auf dem Fahrparameter mittels einer Rechnereinrichtung (20) und Vergleichen der ermittelten Lenkmomentenanforderung mit einem Schwellenwert mittels der Rechnereinrichtung (20) wobei die Rechnereinrichtung (20) dazu ausgelegt ist,
die zu erwartende Lenkmomentenanforderung innerhalb einer zukünftigen Zeitspanne von 0 bis 8 Sekunden für das automatische Lenksystem zu ermitteln und
den Schwellenwert basierend auf einer Geschwindigkeit des Kraftfahrzeugs zu berechnen; und
- Anzeigen (S3) einer Rückinformation basierend auf dem Schwellenwert und der ermittelten Lenkmomentenanforderung mittels einer Ausgabeeinrichtung (30).

## Claims

1. A device (1) for controlling a steering system for a motor vehicle, wherein the device (1) comprises:
- a sensor apparatus (10) which is designed to sense a driving parameter of the motor vehicle, wherein the sensor apparatus (10) is designed to sense, as the driving parameter of the motor vehicle,
i) a lateral approach speed of the motor vehicle to a road boundary; and/or
ii) a steering of the motor vehicle around bends; and/or
iii) a speed of the motor vehicle; and/or
iv) a deceleration of the motor vehicle;
- a computer apparatus (20) which is designed to determine an expected driving torque request for an automatic steering system on the basis of the driving parameter and to compare the determined driving torque request with a threshold value, wherein the computer apparatus (20) is designed
to determine the expected driving torque request within a future time span of 0 to 8 seconds for the automatic steering system, and
to calculate the threshold value on the basis of a speed of the motor vehicle; and
- an output apparatus (30) which is designed to display feedback information on the basis of the threshold value and the determined driving torque request.

2. The device according to Claim 1,
wherein the computer apparatus (20) is designed to determine the expected driving torque request within a future time span of 0 to 3 seconds, preferably within a future time span of 0 to 1.5 seconds for the automatic steering system.

3. The device according to any one of the preceding Claims 1 and 2,
wherein the computer apparatus (20) is designed to determine the expected driving torque request for a lateral control of the automatic steering system.

4. The device according to any one of the preceding Claims 1 to 3,
wherein the computer apparatus (20) is designed to establish the threshold value on the basis of:
i) constructive parameters of the motor vehicle and/or of the steering system; and/or
ii) a controllability limit for achieving the functional safety of the motor vehicle.

5. The device according to any one of the preceding Claims 1 to 4,
wherein the device additionally has: a control apparatus (40) which is designed to alter the driving speed of the motor vehicle.

6. The device according to any one of the preceding Claims 1 to 5,
wherein the output apparatus (30) is configured as an acoustic signal generator, as a visual display, or as a haptic signal generator.

7. The device according to any one of the preceding Claims 1 to 6,
wherein the output apparatus (30) is designed to display the feedback information in the form of a request for the driver to take over if the determined driving torque request is above the threshold value.

8. The device according to any one of the preceding Claims 1 to 7,
wherein the output apparatus (30) is designed to display a performance limit utilization in the form of a ratio of the expected driving torque request to the threshold value.

9. A method for controlling a steering system for a motor vehicle, wherein the method comprises the following method steps:
- sensing (S1) a driving parameter of the motor vehicle by means of a sensor apparatus (10), wherein the sensor apparatus (10) is designed to sense, as the driving parameter of the motor vehicle,
i) a lateral approach speed of the motor vehicle to a road boundary; and/or
ii) a steering of the motor vehicle around bends; and/or
iii) a speed of the motor vehicle; and/or
iv) a deceleration of the motor vehicle; and
- determining (S2) an expected driving torque request for an automatic steering system on the basis of the driving parameter by means of a computer apparatus (20) and comparing the determined driving torque request with a threshold value by means of the computer apparatus (20), wherein the computer apparatus (20) is designed
to determine the expected driving torque request within a future time span of 0 to 8 seconds for the automatic steering system, and
to calculate the threshold value on the basis of a speed of the motor vehicle; and
- displaying (S3) feedback information on the basis of the threshold value and the determined steering torque request by means of an output apparatus (30).

## Revendications

1. Dispositif (1) pour commander un système de direction pour un véhicule automobile, le dispositif (1) comprenant :
- un dispositif de capteur (10), lequel est conçu pour détecter un paramètre de conduite du véhicule automobile, le dispositif de capteur (10) étant conçu pour détecter, comme paramètre de conduite du véhicule automobile,
i) une vitesse d'approche latérale du véhicule automobile d'une limite de chaussée ;
et/ou
ii) une courbe de progression du véhicule automobile ; et/ou
iii) une vitesse du véhicule automobile ; et/ou
iv) une décélération du véhicule automobile ;
- un dispositif informatique (20), lequel est conçu pour déterminer une exigence de couple de direction prévisible pour un système de direction automatique basé sur le paramètre de conduite et pour comparer l'exigence de couple de direction déterminée avec une valeur seuil, le dispositif informatique (20) étant conçu pour déterminer l'exigence de couple de direction prévisible dans un intervalle de temps futur de 0 à 8 secondes pour le système de direction automatique et
calculer la valeur seuil basé sur une vitesse du véhicule automobile ; et
un dispositif de sortie (30), lequel est conçu pour afficher une information en retour basé sur la valeur seuil et sur l'exigence de couple de direction déterminée.

2. Dispositif selon la revendication 1,
le dispositif informatique (20) étant conçu pour déterminer l'exigence de couple de direction prévisible dans un intervalle de temps futur de 0 à 3 secondes, de préférence dans un intervalle de temps futur de 0 à 1,5 seconde, pour le système de direction automatique.

3. Dispositif selon l'une des revendications précédentes 1 et 2,
le dispositif informatique (20) étant conçu pour déterminer l'exigence de couple de direction prévisible pour un réglage transversal du système de direction automatique.

4. Dispositif selon l'une des revendications précédentes 1 à 3,
le dispositif informatique (20) étant conçu pour déterminer la valeur seuil basé sur :
i) des paramètres de construction du véhicule automobile et/ou du système de direction ; et/ou
ii) une limite de gouvemabilité pour atteindre une sécurité fonctionnelle du véhicule automobile.

5. Dispositif selon l'une des revendications précédentes 1 à 4,
le dispositif présentant en outre : un dispositif de commande (40), lequel est conçu pour modifier la vitesse de conduite du véhicule automobile.

6. Dispositif selon l'une des revendications précédentes 1 à 5,
le dispositif de sortie (30) étant formé comme un générateur de signal acoustique, un affichage visuel ou un générateur de signal haptique.

7. Dispositif selon l'une des revendications précédentes 1 à 6,
le dispositif de sortie (30) étant conçu pour afficher l'information en retour sous la forme d'une demande de prise en charge par le conducteur, lorsque l'exigence de couple de direction déterminée est supérieure à la valeur seuil.

8. Dispositif selon l'une des revendications précédentes 1 à 7,
le dispositif de sortie (30) étant conçu pour afficher une atteinte de limite de capacité sous la forme d'un rapport entre l'exigence de couple de direction prévisible et la valeur seuil.

9. Procédé pour la commande d'un système de direction d'un véhicule automobile, le procédé comprenant les étapes de procédé suivantes :
- détection (S1) d'un paramètre de conduite du véhicule automobile à l'aide d'un dispositif de capteur (10), le dispositif de capteur (10) étant conçu pour détecter, comme paramètre de conduite du véhicule automobile,
i) une vitesse d'approche latérale du véhicule automobile d'une limite de chaussée ; et/ou
ii) une courbe de progression du véhicule automobile ; et/ou
iii) une vitesse du véhicule automobile ; et/ou
iv) une décélération du véhicule automobile ; et
- déterminer (S2) une exigence de couple de direction prévisible pour un système de direction automatique basé sur le paramètre de conduite à l'aide d'un dispositif informatique (20) et comparer l'exigence de couple de direction déterminée avec une valeur seuil à l'aide du dispositif informatique (20), le dispositif informatique (20) étant conçu pour déterminer l'exigence de couple de direction prévisible dans un intervalle de temps futur de 0 à 8 secondes pour le système de direction automatique et
calculer la valeur seuil basé sur une vitesse du véhicule automobile ; et
- afficher (S3) une information de retour basé sur la valeur seuil et sur l'exigence de couple de direction déterminée au moyen d'un dispositif de sortie (30).
